(19) Europäisches Patentamt

European Patent Office

Office européen des brevets

(11) **EP 4 583 441 A1**

(12) **EUROPEAN PATENT APPLICATION**
published in accordance with Art. 153(4) EPC

(43) Date of publication:
**09.07.2025 Bulletin 2025/28**

(51) International Patent Classification (IPC):
**H04L 5/00** (2006.01)

(21) Application number: **22959744.8**

(52) Cooperative Patent Classification (CPC):
**H04L 5/00**

(22) Date of filing: **26.09.2022**

(86) International application number:
**PCT/CN2022/121390**

(87) International publication number:
**WO 2024/065092 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **QU, Huiyang
  Shenzhen, Guangdong 518129 (CN)**
• **MA, Qianli
  Shenzhen, Guangdong 518129 (CN)**
• **HUANG, Huang
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **SIGNAL TRANSMISSION METHOD AND APPARATUS**

(57)    This application discloses a signal transmission method and an apparatus. The method includes: obtaining a first data block; precoding the first data block to obtain a second data block; and mapping a first phase noise pilot block and the second data block to time-frequency resources for transmission; or determining a second phase noise pilot block based on a preset condition; combining a to-be-transmitted fourth data block and the second phase noise pilot block to obtain a third signal block; precoding the third signal block to obtain a fourth signal block; and transmitting the fourth signal block. In this application, data is precoded, and precoded data and a phase noise pilot are separately mapped to the time-frequency resources for transmission. Alternatively, data and a phase noise pilot are precoded together, and precoded data is mapped to the time-frequency resources for transmission. Therefore, the phase noise pilot can be sent when the data is sent, so that a receive end can mitigate or even eliminate impact of phase noise based on the phase noise pilot, and reliability of data transmission can be improved.

FIG. 1C

EP 4 583 441 A1

**Description**

TECHNICAL FIELD

This application relates to the field of communication technologies, and in particular, to a signal transmission method and an apparatus.

BACKGROUND

Phase noise (Phase noise) is a random change that is of a phase of a system output signal of a communication system (for example, various radio frequency devices) and that is caused by various types of noise. The phase noise is an important indicator to measure frequency stability quality of a frequency standard source (for example, a high-stability crystal oscillator, an atom frequency standard, or the like). As an operating frequency band of the communication system is increasingly high, especially in a high-frequency (for example, a carrier frequency of 70 GHz) and high-speed movement (for example, a moving speed greater than 250 km/h) scenario, impact of the phase noise is increasingly severe. This poses a challenge to stable transmission of data.

How to mitigate or even eliminate the impact of the phase noise and improve reliability of data transmission is a technical problem to be resolved in this application.

SUMMARY

Embodiments of this application provide a signal transmission method and an apparatus, to mitigate or even eliminate impact of phase noise and improve reliability of data transmission.

According to a first aspect, a signal transmission method is provided, and is applied to a transmit end. The method includes: obtaining a first data block; precoding the first data block to obtain a second data block; and mapping a first phase noise pilot block and the second data block to time-frequency resources for transmission. Precoding the first data block may be precoding the first data block by using a BM-OCDM encoding technology, an OFDM technology, or another technology. This is not limited in this application.

In the foregoing solution, the data is precoded, and precoded data and the phase noise pilot are separately mapped to the time-frequency resources for transmission. Therefore, the phase noise pilot can be sent when the data is sent, so that a receive end can mitigate or even eliminate impact of phase noise based on the phase noise pilot, and reliability of data transmission can be improved.

In a possible implementation, the second data block includes $(M - M_{PTRS}) \times N$ data symbols, the first phase noise pilot block includes $M_{PTRS} \times N$ pilot symbols, M is a sum of a quantity of subcarriers used to transmit the second data block and a quantity of subcarriers used to transmit the first phase noise pilot block, and M, $M_{PTRS}$, and N are positive integers. Correspondingly, the mapping a first phase noise pilot block and the second data block to time-frequency resources for transmission includes: configuring $M_{PTRS}$ pilot symbols and $(M - M_{PTRS})$ data symbols on each of N OFDM symbols.

In this implementation, the phase noise pilot may be added in frequency domain. In other words, the first phase noise pilot block and the second data block are signals in frequency domain.

In a possible implementation, the $M_{PTRS}$ pilot symbols are evenly spaced apart on the OFDM symbol.

In this implementation, the pilot symbols can be evenly distributed in frequency domain. This helps improve reliability of phase noise pilot transmission.

In a possible implementation, a pilot signal of the first phase noise pilot block is a first reference signal, and the first reference signal is related to at least one of a user identifier ID, a quantity of frequency domain resources of a user, and a quantity of phase noise pilots of the user.

In this manner, the pilot signal of the first phase noise pilot block may be a known signal in frequency domain, so that the receive end parses the phase noise pilot from a received signal.

In a possible implementation, a pilot signal of the first phase noise pilot block causes a value of a third data block at a first time domain position index to be a second reference signal, the third data block is obtained by performing inverse Fourier transform on the second data block, the first time domain position index is a first preset index, and the second reference signal is related to at least one of a user ID, a quantity of frequency domain resources of a user, and a quantity of phase noise pilots of the user.

In this manner, after the first phase noise pilot block is transformed to time domain, a pilot signal in time domain is a known signal, so that the receive end parses the phase noise pilot from a received signal.

In a possible implementation, the mapping a first phase noise pilot block and the second data block to time-frequency resources for transmission includes: combining the first phase noise pilot block and the second data block into a first signal block; and performing Fourier transform on the first signal block to obtain a second signal block, and mapping the second signal block to the time-frequency resource for transmission. A pilot signal of the first phase noise pilot block causes a value of the second signal block at a first frequency domain position index to be a third reference signal, the first frequency domain position index is a second preset index, and the third reference signal is related to at least one of a user ID, a quantity of frequency domain resources of a user, and a quantity of phase noise pilots of the user.

In this manner, the phase noise pilot may be added in time domain. In other words, the first phase noise pilot block and the second data block are signals in time domain.

In a possible implementation, a time-frequency resource of the first phase noise pilot block is different from a time-frequency resource of the second data block.

In this implementation, the data and the phase noise pilot may be transmitted on different time-frequency resources. Therefore, the reliability of data transmission can be improved.

In a possible implementation, the first phase noise pilot block includes $M_{PTRS} \times N$ pilot symbols and is represented as a first matrix being $M_{PTRS} \times N$ dimensional, the first data block includes $(M - M_{PTRS}) \times N$ data symbols and is represented as a second matrix being $(M - M_{PTRS}) \times N$ dimensional, M is a sum of a quantity of subcarriers used to transmit the first data block and a quantity of subcarriers used to transmit the first phase noise pilot block, N is a quantity of OFDM symbols, and M, $M_{PTRS}$, and N are positive integers.

A first column vector $X_{PTRS}(:,1)$ in the first matrix meets the following relationship:

$$X_{PTRS}(:,1) = (\overline{P}_{PTRS})^{-1}\left(\begin{bmatrix} a \\ a \\ \vdots \\ a \end{bmatrix} - \overline{P}_{data}X_{QAM}(:,1)\right)$$

$X_{QAM}(:,1)$ is a first column vector in the second matrix. $\begin{bmatrix} a \\ a \\ \vdots \\ a \end{bmatrix}$ is a matrix being $M_{PTRS}$ dimensional, and $a$ is a preset value.

$\overline{P}_{PTRS}$ is a submatrix extracted from a matrix $P$ based on the first time domain position index, the matrix $P = F_M^H \times A$, $A = F_M^H \wedge F_M$, $F_M^H$ represents a conjugate transpose of a matrix $F_M$, ^ represents a diagonal matrix being M*M dimensional, and $F_M$ represents a Fourier transform matrix being M*M dimensional.

$\overline{P}_{data}$ is a submatrix formed by an element remaining after the submatrix $\overline{P}_{PTRS}$ is extracted from the matrix P.

An $n^{th}$ column vector $X_{PTRS}(:, n)$ in the first matrix meets the following relationship:

$$X_{PTRS}(:, n) = (\overline{P}_{PTRS})^{-1}\left(\begin{bmatrix} 0 \\ 0 \\ \vdots \\ 0 \end{bmatrix} - \overline{P}_{data}X_{QAM}(:, n)\right)$$

$X_{QAM}(:, n)$ is an $n^{th}$ column vector in the second matrix, and a value of n is a positive integer between 2 and N.

In this implementation, a value of each phase noise pilot symbol in the first phase noise pilot block may be determined, so that a time-frequency resource position of the phase noise pilot symbol in a finally transmitted signal is at a preset position.

According to a second aspect, a signal transmission method is provided, and is applied to a transmit end. The method includes: determining a second phase noise pilot block based on a preset condition; combining a to-be-transmitted fourth data block and the second phase noise pilot block to obtain a third signal block; precoding the third signal block to obtain a fourth signal block; and transmitting the fourth signal block. Precoding the first data block may be precoding the first data block by using a BM-OCDM encoding technology, an OFDM technology, or another technology. This is not limited in this application.

In the foregoing solution, the phase noise pilot and the data are combined and then precoded, and precoded data is mapped to time-frequency resources. Therefore, the phase noise pilot can be sent when the data is sent, so that a receive end can mitigate or even eliminate impact of the phase noise, and reliability of data transmission can be improved.

In this embodiment of this application, the preset condition includes: In a finally sent signal, a time-frequency resource position of a phase noise pilot signal is a preset time-frequency resource position. In this way, the receive end parses the phase noise pilot from a received signal.

The following describes several specific implementations of the preset condition.

In a possible implementation, the preset condition includes: a value of the fourth signal block at a second frequency domain position index is a fourth reference signal, the fourth reference signal is related to at least one of a user ID, a quantity of frequency domain resources of a user, and a quantity of phase noise pilots of the user, and the second frequency domain position index is a third preset index.

In this implementation, after the second phase noise pilot block is precoded, a pilot signal in frequency domain is a known signal, so that it can be ensured that, in the finally sent signal, the time-frequency resource position of the phase noise pilot signal is a preset time-frequency resource position.

In a possible implementation, the preset condition includes: a value of a fifth signal block at a second time domain position index is a fifth reference signal, the fifth signal block is obtained by performing inverse Fourier transform on the fourth signal block, the second time domain position index is a fourth preset index, and the fifth reference signal is related to at least one of a user ID, a quantity of frequency domain resources of a user, and a quantity of phase noise pilots of the user.

In this implementation, after inverse Fourier transform is performed on the second phase noise pilot block, a pilot signal in time domain is a known signal, so that it can be ensured that, in the finally sent signal, the time-frequency resource position of the phase noise pilot signal is a preset time-frequency resource position.

In a possible implementation, the transmitting the fourth signal block includes: performing Fourier transform on the fourth signal block to obtain a sixth signal block; and transmitting the sixth signal block. The preset condition includes: a value of the fourth signal block at a second time domain position index is a fifth reference signal, the fifth reference signal is related to at least one of a user ID, a quantity of frequency domain resources of a user, and a quantity of phase noise pilots of the user, and the second time domain position index is a fourth preset index.

In this implementation, a pilot signal of the second phase noise pilot block is a known signal, so that it can be ensured that, in the finally sent signal, the time-frequency resource position of the phase noise pilot signal is a preset time-frequency resource position.

In a possible implementation, the second phase noise pilot block includes $M_{PTRS} \times N$ pilot symbols and is represented as a first matrix being $M_{PTRS} \times N$ dimensional, the fourth data block includes $(M - M_{PTRS}) \times N$ data symbols and is represented as a second matrix being $(M - M_{PTRS}) \times N$ dimensional, M is a sum of a quantity of subcarriers used to transmit the fourth data block and a quantity of subcarriers used to transmit the second phase noise pilot block, N is a quantity of OFDM symbols, M, $M_{PTRS}$, and N are positive integers, and the third signal block is represented as a third matrix being $M \times N$ dimensional.

A first column vector $X_{PTRS}(:,1)$ in the first matrix meets the following relationship:

$$X_{PTRS}(:,1) = (\overline{P}_{PTRS})^{-1} \left( \begin{bmatrix} a \\ a \\ \vdots \\ a \end{bmatrix} - \overline{P}_{data} X_{QAM}(:,1) \right)$$

$X_{QAM}(:,1)$ is a first column vector in the second matrix. $\begin{bmatrix} a \\ a \\ \vdots \\ a \end{bmatrix}$ is a matrix being $M_{PTRS}$ dimensional, and $a$ is a preset value.

$\overline{P}_{PTRS}$ is a submatrix extracted from a matrix $P$ based on the second frequency domain position index, the matrix $P = F_M^H \times A$, $A = F_M^H \wedge F_M$, $F_M^H$ represents a conjugate transpose of a matrix $F_M$, $\wedge$ represents a diagonal matrix being M*M dimensional, and $F_M$ represents a Fourier transform matrix being M*M dimensional.

$\overline{P}_{data}$ is a submatrix formed by an element remaining after the submatrix $\overline{P}_{PTRS}$ is extracted from the matrix P.

An n$^{th}$ column vector $X_{PTRS}(:,n)$ in the first matrix meets the following relationship:

$$X_{PTRS}(:,n) = (\overline{P}_{PTRS})^{-1}\left(\begin{bmatrix} 0 \\ 0 \\ \vdots \\ 0 \end{bmatrix} - \overline{P}_{data}X_{QAM}(:,n)\right)$$

$X_{QAM}(:,n)$ is an $n^{th}$ column vector in the second matrix, and a value of n is a positive integer between 2 and N.

In this manner, a value of the second phase noise pilot block, that is, the first matrix, may be calculated based on the second frequency domain position index.

In a possible implementation, the second phase noise pilot block includes $M_{PTRS} \times$ N pilot symbols and is represented as a first matrix being $M_{PTRS} \times N$ dimensional, the fourth data block includes (M - $M_{PTRS}$) $\times$ N data symbols and is represented as a second matrix being (M - $M_{PTRS}$) $\times N$ dimensional, M is a sum of a quantity of subcarriers used to transmit the fourth data block and a quantity of subcarriers used to transmit the second phase noise pilot block, N is a quantity of OFDM symbols, M, $M_{PTRS}$, and N are positive integers, and the third signal block is represented as a third matrix being M $\times N$ dimensional.

A first column vector $X_{PTRS}(:,1)$ in the first matrix meets the following relationship:

$$X_{PTRS}(:,1) = (\overline{P}_{PTRS})^{-1}\left(\begin{bmatrix} a \\ a \\ \vdots \\ a \end{bmatrix} - \overline{P}_{data}X_{QAM}(:,1)\right)$$

$X_{QAM}(:,1)$ is a first column vector in the second matrix. $\begin{bmatrix} a \\ a \\ \vdots \\ a \end{bmatrix}$ is a matrix being $M_{PTRS}$ dimensional, and $a$ is a preset value.

$\overline{P}_{PTRS}$ is a submatrix extracted from a matrix $P$ based on the second time domain position index, the matrix $P = F_M^H \times A$, $A = F_M^H \wedge F_M$, $F_M^H$ represents a conjugate transpose of a matrix $F_M$, $\wedge$ represents a diagonal matrix being M*M dimensional, and $F_M$ represents a Fourier transform matrix being M*M dimensional.

$\overline{P}_{data}$ is a submatrix formed by an element remaining after the submatrix $\overline{P}_{PTRS}$ is extracted from the matrix P.

An $n^{th}$ column vector $X_{PTRS}(:,n)$ in the first matrix meets the following relationship:

$$X_{PTRS}(:,n) = (\overline{P}_{PTRS})^{-1}\left(\begin{bmatrix} 0 \\ 0 \\ \vdots \\ 0 \end{bmatrix} - \overline{P}_{data}X_{QAM}(:,n)\right)$$

$X_{QAM}(:,n)$ is an $n^{th}$ column vector in the second matrix, and a value of n is a positive integer between 2 and N.

In this manner, a value of the second phase noise pilot block, that is, the first matrix, may be calculated based on the second time domain position index.

According to a third aspect, a signal transmission method is provided, and is applied to a receive end. The method includes: receiving a signal, where the signal is a signal formed after a signal sent by the transmit end in the first aspect or the second aspect is transmitted through a channel; and determining phase noise based on the signal.

According to a fourth aspect, a signal transmission system is provided, including:

a transmit end, configured to perform the method according to the first aspect or any one of the possible implementations of the first aspect or the second aspect or any one of the possible implementations of the second aspect; and

a receive end, configured to perform the method according to the third aspect.

According to a fifth aspect, a signal transmission apparatus is provided, including a module, a unit, or a technical means configured to implement the method according to the first aspect or any one of the possible implementations of the first aspect.

For example, the apparatus may include: an obtaining module, configured to obtain a first data block; an encoding module, configured to precode the first data block to obtain a second data block; and a transmission module, configured to map a first phase noise pilot block and the second data block to time-frequency resources for transmission.

In a possible implementation, the second data block includes (M - $M_{PTRS}$) × N data symbols, the first phase noise pilot block includes $M_{PTRS}$ × N pilot symbols, M is a sum of a quantity of subcarriers used to transmit the second data block and a quantity of subcarriers used to transmit the first phase noise pilot block, and M, $M_{PTRS}$, and N are positive integers; and the transmission module is configured to: configure $M_{PTRS}$ pilot symbols and (M - $M_{PTRS}$) data symbols on each of N orthogonal frequency division multiplexing OFDM symbols.

In a possible implementation, the $M_{PTRS}$ pilot symbols are evenly spaced apart on the OFDM symbol.

In a possible implementation, a pilot signal of the first phase noise pilot block is a first reference signal, and the first reference signal is related to at least one of a user ID, a quantity of frequency domain resources of a user, and a quantity of phase noise pilots of the user.

In a possible implementation, a pilot signal of the first phase noise pilot block causes a value of a third data block at a first time domain position index to be a second reference signal, the third data block is obtained by performing inverse Fourier transform on the second data block, the first time domain position index is a first preset index, and the second reference signal is related to at least one of a user ID, a quantity of frequency domain resources of a user, and a quantity of phase noise pilots of the user.

In a possible implementation, the transmission module is configured to: combine the first phase noise pilot block and the second data block into a first signal block; and perform Fourier transform on the first signal block to obtain a second signal block, and map the second signal block to the time-frequency resource for transmission. A pilot signal of the first phase noise pilot block causes a value of the second signal block at a first frequency domain position index to be a third reference signal, the first frequency domain position index is a second preset index, and the third reference signal is related to at least one of a user ID, a quantity of frequency domain resources of a user, and a quantity of phase noise pilots of the user.

In a possible implementation, a time-frequency resource of the first phase noise pilot block is different from a time-frequency resource of the second data block.

In a possible implementation, the first phase noise pilot block includes $M_{PTRS}$ × N pilot symbols and is represented as a first matrix being $M_{PTRS}$ × N dimensional, the first data block includes (M - $M_{PTRS}$) × N data symbols and is represented as a second matrix being (M - $M_{PTRS}$) × N dimensional, M is a sum of a quantity of subcarriers used to transmit the first data block and a quantity of subcarriers used to transmit the first phase noise pilot block, N is a quantity of OFDM symbols, and M, $M_{PTRS}$, and N are positive integers.

A first column vector $X_{PTRS}(:,1)$ in the first matrix meets the following relationship:

$$X_{PTRS}(:,1) = (\overline{P}_{PTRS})^{-1}\left(\begin{bmatrix} a \\ a \\ \vdots \\ a \end{bmatrix} - \overline{P}_{data}X_{QAM}(:,1)\right)$$

$X_{QAM}(:,1)$ is a first column vector in the second matrix. $\begin{bmatrix} a \\ a \\ \vdots \\ a \end{bmatrix}$ is a matrix being $M_{PTRS}$ dimensional, and $a$ is a preset value.

$\overline{P}_{PTRS}$ is a submatrix extracted from a matrix P based on the first time domain position index, the matrix $P = F_M^H \times A$, $A = F_M^H \wedge F_M$, $F_M^H$ represents a conjugate transpose of a matrix $F_M$, ^ represents a diagonal matrix being M*M dimensional, and $F_M$ represents a Fourier transform matrix being M*M dimensional.

$\overline{P}_{data}$ is a submatrix formed by an element remaining after the submatrix $\overline{P}_{PTRS}$ is extracted from the matrix P.

An $n^{th}$ column vector $X_{PTRS}(:,n)$ in the first matrix meets the following relationship:

$$X_{PTRS}(:,n) = (\overline{P}_{PTRS})^{-1}\left(\begin{bmatrix} 0 \\ 0 \\ \vdots \\ 0 \end{bmatrix} - \overline{P}_{data}X_{QAM}(:,n)\right)$$

$X_{QAM}(:,n)$ is an $n^{th}$ column vector in the second matrix, and a value of n is a positive integer between 2 and N.

In a possible implementation, the encoding module is configured to precode the first data block by using a block multiplexing BM-orthogonal chirp division multiplexing OCDM encoding technology or an OFDM technology.

According to a sixth aspect, a signal transmission apparatus is provided, including a module, a unit, or a technical means configured to implement the method according to the second aspect or any one of the possible implementations of the second aspect.

For example, the apparatus may include: a determining module, configured to determine a second phase noise pilot block based on a preset condition; an encoding module, configured to: combine a to-be-transmitted fourth data block and the second phase noise pilot block to obtain a third signal block, and precode the third signal block to obtain a fourth signal block; and a transmission module, configured to transmit the fourth signal block.

In a possible implementation, the preset condition includes: a value of the fourth signal block at a second frequency domain position index is a fourth reference signal, the fourth reference signal is related to at least one of a user IDID, a quantity of frequency domain resources of a user, and a quantity of phase noise pilots of the user, and the second frequency domain position index is a third preset index.

In a possible implementation, the preset condition includes: a value of a fifth signal block at a second time domain position index is a fifth reference signal, the fifth signal block is obtained by performing inverse Fourier transform on the fourth signal block, the second time domain position index is a fourth preset index, and the fifth reference signal is related to at least one of a user IDID, a quantity of frequency domain resources of a user, and a quantity of phase noise pilots of the user.

In a possible implementation, the transmission module is configured to: perform Fourier transform on the fourth signal block to obtain a sixth signal block; and transmit the sixth signal block. The preset condition includes: a value of the fourth signal block at a second time domain position index is a fifth reference signal, the fifth reference signal is related to at least one of a user ID, a quantity of frequency domain resources of a user, and a quantity of phase noise pilots of the user, and the second time domain position index is a fourth preset index.

In a possible implementation, the second phase noise pilot block includes $M_{PTRS} \times N$ pilot symbols and is represented as a first matrix being $M_{PTRS} \times N$ dimensional, the fourth data block includes $(M - M_{PTRS}) \times N$ data symbols and is represented as a second matrix being $(M - M_{PTRS}) \times N$ dimensional, M is a sum of a quantity of subcarriers used to transmit the fourth data block and a quantity of subcarriers used to transmit the second phase noise pilot block, N is a quantity of OFDM symbols, M, $M_{PTRS}$, and N are positive integers, and the third signal block is represented as a third matrix being $M \times N$ dimensional.

A first column vector $X_{PTRS}(:,1)$ in the first matrix meets the following relationship:

$$X_{PTRS}(:,1) = (\overline{P}_{PTRS})^{-1}\left(\begin{bmatrix} a \\ a \\ \vdots \\ a \end{bmatrix} - \overline{P}_{data}X_{QAM}(:,1)\right)$$

$X_{QAM}(:,1)$ is a first column vector in the second matrix. $\begin{bmatrix} a \\ a \\ \vdots \\ a \end{bmatrix}$ is a matrix being $M_{PTRS}$ dimensional, and $a$ is a preset value.

$\overline{P}_{PTRS}$ is a submatrix extracted from a matrix $P$ based on the second frequency domain position index, the matrix

$$P = F_M^H \times A, \quad A = F_M^H \wedge F_M, \quad F_M^H$$ represents a conjugate transpose of a matrix $F_M$, ^ represents a diagonal matrix being M*M dimensional, and $F_M$ represents a Fourier transform matrix being M*M dimensional.

$\overline{P}_{data}$ is a submatrix formed by an element remaining after the submatrix $\overline{P}_{PTRS}$ is extracted from the matrix P.

An $n^{th}$ column vector $X_{PTRS}(:,n)$ in the first matrix meets the following relationship:

$$X_{PTRS}(:,n) = (\overline{P}_{PTRS})^{-1}\left(\begin{bmatrix} 0 \\ 0 \\ \vdots \\ 0 \end{bmatrix} - \overline{P}_{data}X_{QAM}(:,n)\right)$$

$X_{QAM}(:,n)$ is an $n^{th}$ column vector in the second matrix, and a value of n is a positive integer between 2 and N.

In a possible implementation, the second phase noise pilot block includes $M_{PTRS} \times N$ pilot symbols and is represented as a first matrix being $M_{PTRS} \times N$ dimensional, the fourth data block includes $(M - M_{PTRS}) \times N$ data symbols and is represented as a second matrix being $(M - M_{PTRS}) \times N$ dimensional, M is a sum of a quantity of subcarriers used to transmit the fourth data block and a quantity of subcarriers used to transmit the second phase noise pilot block, N is a quantity of OFDM symbols, M, $M_{PTRS}$, and N are positive integers, and the third signal block is represented as a third matrix being $M \times N$ dimensional.

A first column vector $X_{PTRS}(:,1)$ in the first matrix meets the following relationship:

$$X_{PTRS}(:,1) = (\overline{P}_{PTRS})^{-1}\left(\begin{bmatrix} a \\ a \\ \vdots \\ a \end{bmatrix} - \overline{P}_{data}X_{QAM}(:,1)\right)$$

$X_{QAM}(:,1)$ is a first column vector in the second matrix. $\begin{bmatrix} a \\ a \\ \vdots \\ a \end{bmatrix}$ is a matrix being $M_{PTRS}$ dimensional, and $a$ is a preset value.

$\overline{P}_{PTRS}$ is a submatrix extracted from a matrix $P$ based on the second time domain position index, the matrix

$$P = F_M^H \times A, \quad A = F_M^H \wedge F_M, \quad F_M^H$$ represents a conjugate transpose of a matrix $F_M$, ^ represents a diagonal matrix being M*M dimensional, and $F_M$ represents a Fourier transform matrix being M*M dimensional.

$\overline{P}_{data}$ is a submatrix formed by an element remaining after the submatrix $\overline{P}_{PTRS}$ is extracted from the matrix P.

An $n^{th}$ column vector $X_{PTRS}(:,n)$ in the first matrix meets the following relationship:

$$X_{PTRS}(:,n) = (\overline{P}_{PTRS})^{-1}\left(\begin{bmatrix} 0 \\ 0 \\ \vdots \\ 0 \end{bmatrix} - \overline{P}_{data}X_{QAM}(:,n)\right)$$

$X_{QAM}(:,n)$ is an $n^{th}$ column vector in the second matrix, and a value of n is a positive integer between 2 and N.

In a possible implementation, the encoding module is configured to precode the first data block by using a block multiplexing BM-orthogonal chirp division multiplexing OCDM encoding technology or an OFDM technology.

According to a seventh aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the first aspect or any one of the possible implementations of the first aspect or the method according to the second aspect or any one of the possible implementations of the second aspect by using a logic circuit or by executing code instructions.

According to an eighth aspect, a computer-readable storage medium is provided. The storage medium stores a computer program or instructions. When the computer program or the instructions are executed by a communication apparatus, the method according to the first aspect or any one of the possible implementations of the first aspect or the method according to the second aspect or any one of the possible implementations of the second aspect is implemented.

According to a ninth aspect, a computer program product is provided. The computer program product stores instructions. When the instructions are run on a computer, the computer is enabled to perform the method according to the first aspect or any one of the possible implementations of the first aspect or the method according to the second aspect or any one of the possible implementations of the second aspect is implemented.

BRIEF DESCRIPTION OF DRAWINGS

FIG. 1A to FIG. 1C are diagrams of several wireless communication systems to which embodiments of this application are applicable;
FIG. 2 is a flowchart of a signal transmission method according to an embodiment of this application;
FIG. 3 is a diagram of a possible signal processing procedure;
FIG. 4 is a diagram of forming a first signal block;
FIG. 5 is a diagram of a possible signal processing procedure;
FIG. 6 is a flowchart of another signal transmission method according to an embodiment of this application;
FIG. 7 is a flowchart of possible signal processing;
FIG. 8 is a diagram of forming a fourth signal block;
FIG. 9 is a diagram of performing Fourier transform on a signal;
FIG. 10 is a diagram of a communication apparatus according to an embodiment of this application;
FIG. 11 is a diagram of another communication apparatus according to an embodiment of this application; and
FIG. 12 is a diagram of another communication apparatus according to an embodiment of this application.

DESCRIPTION OF EMBODIMENTS

Embodiments of this application may be applied to various wireless communication systems.

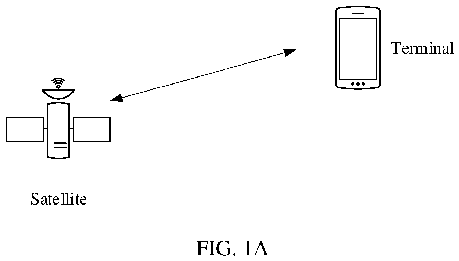

For example, refer to FIG. 1A. Embodiments of this application may be applied to a system for communication between a satellite and a terminal, and the system includes the satellite and a terminal-type network element. The satellite provides a communication service for a terminal device. For example, the terminal device includes but is not limited to a device such as a smartphone, a smartwatch, or a tablet computer. The satellite transmits downlink data to the terminal, and the terminal transmits uplink data to the satellite.

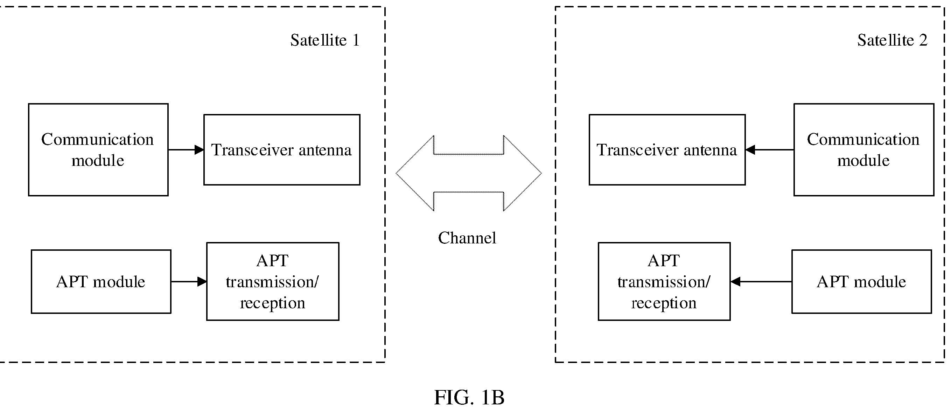

For example, refer to FIG. 1B. Embodiments of this application may be applied to a system for communication between satellites. A traditional inter-satellite link communication system may be divided into two parts: an acquisition, tracking, and pointing (Acquisition, Tracking, and Pointing, APT) subsystem and a communication subsystem. The communication subsystem is responsible for inter-satellite information transmission, and is a main body of the inter-satellite communication system. The APT subsystem is responsible for acquisition, pointing, and tracking between the satellites. Acquisition means to determine a direction of arrival of an incident signal, pointing means to adjust a transmit wave to point at a receiving direction, and tracking means continuous adjustment and acquisition in an entire communication process.

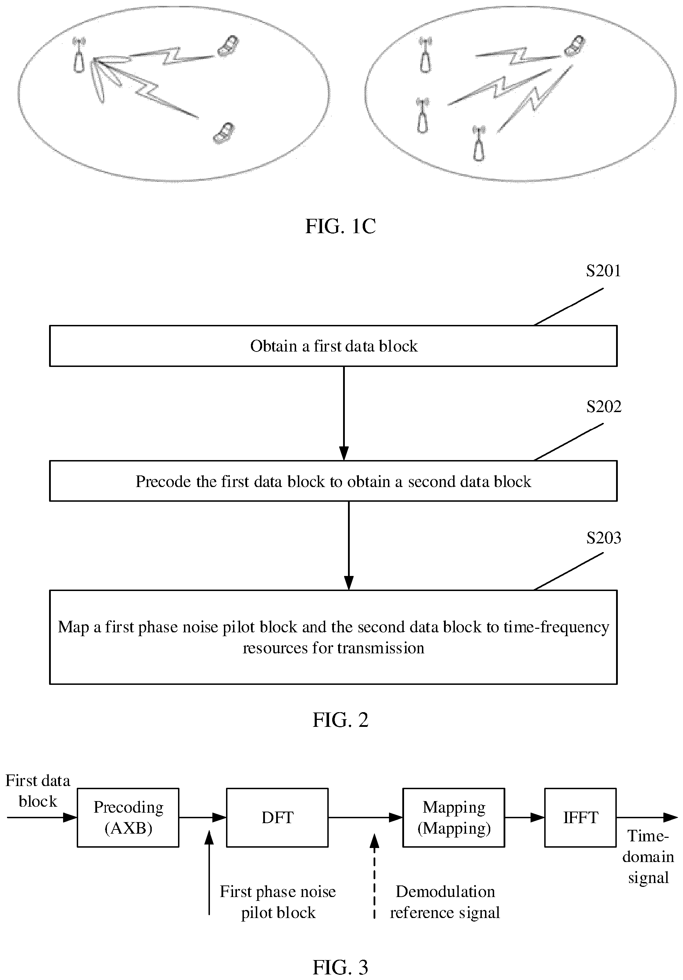

For example, refer to FIG. 1C. Embodiments of this application may be applied to a wireless communication system such as a cellular communication system or a wireless local area network communication system. In the cellular communication system, one network device may provide a service for a plurality of terminals, and one terminal may also communicate with a plurality of network devices. In the wireless local area network communication system, one access point may serve the plurality of terminals, and one terminal may also communicate with a plurality of access points.

The network device is an apparatus that is deployed in a radio access network or a wireless local area network and that provides a wireless communication function for a terminal device. The network device may include a macro base station, a micro base station (also referred to as a small cell), a relay station, an access point, and the like in various forms. In systems using different radio access technologies, names of the network device may be different. Alternatively, the network device may be a radio controller in a CRAN (Cloud Radio Access Network, cloud radio access network) scenario. Alternatively, the network device may be a base station device in a $5^{th}$ generation mobile communication technology ($5^{th}$

generation mobile networks, 5G) network or a 6<sup>th</sup> generation mobile communication technology (6<sup>th</sup> generation mobile networks, 6G) network, or a network device in an evolved public land mobile network (public land mobile network, PLMN) network. Alternatively, the network device may be a wearable device or a vehicle-mounted device. Alternatively, the network device may be a transmission and reception point (Transmission and Reception Point, TRP). Alternatively, the network device may be an access point (access point, AP).

In addition, the terminal in this specification may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in embodiments of this application.

The network device and the terminal may be at a fixed position or may be movable. The network device and the terminal may be deployed on land, including indoor or outdoor and handheld or vehicle-mounted, may be deployed on water, or may be deployed on an airplane, a balloon, and a satellite in the air. Application scenarios of the network device and the terminal are not limited in embodiments of this application.

It should be understood that the foregoing several communication systems are merely examples. During actual application, embodiments of this application may be further applied to another communication system.

FIG. 2 is a flowchart of a signal transmission method according to an embodiment of this application. The method may be applied to the communication scenario shown in FIG. 1A, FIG. 1B, or FIG. 1C, or another communication scenario. This is not limited in this application. The method may be performed by a signal sender. The signal sender may be any device (such as a satellite, a terminal, or a base station) that needs to send a signal. The method includes the following steps.

S201: Obtain a first data block.

It may be understood that the first data block is a to-be-transmitted data block. A specific implementation of obtaining the first data block may be generating the first data block or receiving the first data block from another device. This is not limited in this application.

In a possible example, a first data stream is obtained, and the first data stream is split based on a preset data block size to obtain at least one data block. The first data block is one of the at least one data block. The preset data block size may be a preset quantity of data symbols, and may be specifically determined based on a system bandwidth and a quantity of time-domain symbols. Time-frequency resources of 5G new radio (new radio, NR) are used as an example. In frequency domain, a bandwidth includes 512 subcarriers (corresponding to 512 resource elements (resource element, RE)), and there are 14 OFDM symbols in time domain. There are 10 OFDMs that can be used to transmit the data symbol, and there are 491 REs that can be used to transmit the data symbol. In this case, the preset data block size may be (491×10) data symbols. Certainly, this is merely an example, and is not limited thereto in practice.

S202: Precode the first data block to obtain a second data block.

There may be a plurality of precoding manners, for example, orthogonal frequency division multiplexing (orthogonal frequency division multiplexing, OFDM), BM-OCDM, or another encoding manner. The BM-OCDM is a two-dimensional precoding scheme formed by combining an orthogonal chirp division multiplexing (orthogonal chirp division multiplexing, OCDM) technology and a block multiplexing (block multiplexing, BM) technology. Because the BM-OCDM can disperse all data across an entire time-frequency dimension, more channel diversity gain is obtained, so that better demodulation performance is implemented.

The following describes an encoding principle of the BM-OCDM.

A to-be-sent data block (for example, the first data block) is represented in a form of two-dimensional matrix, for example, $X$, where $X \in C^{M,N}$. $X$ is M*N dimensional, elements in the matrix are data symbols in to-be-sent data, and the to-be-sent data block includes M*N data symbols in total. The BM-OCDM is used to precode the data block X, which may be represented as:

$$S = AXB$$

A and B respectively represent left and right transformation matrices, $A = F_M^H \wedge F_M$, and $B = F_N^H . F_M$ represents a Fourier transform matrix being M*M dimensional, $F_N$ represents a Fourier transform matrix being N*N dimensional, $F_M^H$ represents a conjugate transpose of the matrix $F_M$, $\wedge$ is a diagonal matrix being M*M dimensional, and $\wedge$

may be represented as $\wedge (n, n) = \exp(-j2\pi n^2 / N)$.

It should be noted that, when A and B are both identity matrices, $S = AXB$, which is equivalent to OFDM encoding.

For ease of description, the following uses BN-OCDM encoding as an example. To be specific, A and B are not identity matrices.

S203: Map a first phase noise pilot block and the second data block to time-frequency resources for transmission.

It may be understood that a phase noise pilot is a pilot used to correct phase noise. The first phase noise pilot block is a phase noise pilot block including a plurality of pilot symbols (or referred to as phase noise pilot symbols). The first phase noise pilot block may be represented in a form of two-dimensional matrix, for example, $X_{PTRS}$, where $X_{PTRS} \in C^{M_{PTRS},N}$, which represents a matrix being $M_{PTRS} \times N$ dimensional. Elements in the matrix are pilot symbols in the first phase noise pilot block, and the first phase noise pilot block includes $M_{PTRS} \times N$ data symbols in total. $M_{PTRS}$ represents a quantity of subcarriers that can be used to transmit the phase noise pilot symbol, and N represents a quantity of OFDM symbols that can be used to transmit the phase noise pilot symbol.

In this embodiment of this application, a time-frequency resource of the first phase noise pilot block is different from a time-frequency resource of the second data block. For example, the phase noise pilot symbol and the data symbol on a same OFDM symbol are respectively carried on different REs on the OFDM symbol.

For example, each symbol (or each element) in the first signal block or the second signal block and each symbol in a second phase noise pilot block correspond to one determined time-frequency resource in time domain and frequency domain (for example, correspond to one OFDM symbol in time domain and correspond to one RE in frequency domain). The time-frequency resource of 5G NR is used as an example. There are 512 frequency resources (resource element, RE) (that is, M=512) and 14 OFDM symbols (including four known reference symbols, that is, N=10). It is assumed that a spacing between a phase noise symbol and a pilot symbol on a frequency domain resource is 24 REs, a quantity of phase noise pilot symbols (that is, a quantity of subcarriers used by a phase noise pilot) in a frequency direction is $M_{PTRS}$=21, and a quantity of data symbols (that is, a quantity of subcarriers used by the first data block or the second data block) in the frequency direction is $M_{data}$ = 512 - 21 = 491. In this case, BM-OCDM transform is performed on a data block (that is, the first data block) being $(M - M_{PTRS}) \times (N - N_{DMRS})$=491×10 dimensional, to obtain the second data block $X_D = AX_{QAM}B$. $X_D$ and a phase noise pilot block being $M_{PTRS} \times (N - N_{DMRS})$=21×10 dimensional may be combined into a signal block being M×N dimensional. Symbols in the signal block are in a one-to-one correspondence with (512×14) REs.

Mapping the first phase noise pilot block and the second data block to the time-frequency resources for transmission includes: mapping the first phase noise pilot block and the second data block to the time-frequency resources, forming a time-domain signal through inverse Fourier transform, and sending the time-domain signal. The sent signal includes a signal corresponding to the data symbol (referred to as a data signal) and a signal corresponding to the phase noise pilot symbol (referred to as a pilot signal).

After the first phase noise pilot block and the second data block are mapped together to the time-frequency resources for transmission, a signal received by a receive end includes the pilot signal, and the receive end may further compensate for phase noise based on the pilot signal. For example, after receiving a signal including the phase noise pilot, the receive end may obtain a phase error of the signal including the phase noise pilot. The receive end obtains a phase error of a signal including no phase noise pilot (for example, a signal formed by separately mapping the second data block to the time-frequency resource for transmission), and then performs linear interpolation between two phase errors, to obtain a phase offset value of the phase noise, so that the phase noise can be corrected based on the phase offset value.

In a possible design, a phase noise pilot may be added in time domain. In other words, the first phase noise pilot block and the second data block are signals in time domain. Mapping the first phase noise pilot block and the second data block to the time-frequency resources for transmission includes: combining the first phase noise pilot block and the second data block into the first signal block, performing Fourier transform on the first signal block (that is, transforming the first signal block to frequency domain) to obtain the second signal block, and mapping the second signal block to the time-frequency resource for transmission. Mapping the second signal block to the time-frequency resource for transmission may specifically include: mapping the second signal block to a subcarrier to obtain a frequency-domain signal, and then performing inverse Fourier transform on the frequency-domain signal to form the time-domain signal, and sending the time-domain signal.

For example, FIG. 3 is a diagram of a signal processing procedure. The first data block is precoded (for example, by using BM-OCDM encoding) to obtain the second data block. The second data block and the first phase noise pilot are combined together, and then processing such as Fourier transform (DFT), mapping (that is, subcarrier mapping), and inverse Fourier transform (IFFT) is performed to form the time-domain signal, and the time-domain signal is sent. Optionally, after DFT and before mapping is performed, a demodulation reference signal may be further added.

For ease of understanding, the following describes a process of forming the first signal block by using a matrix.

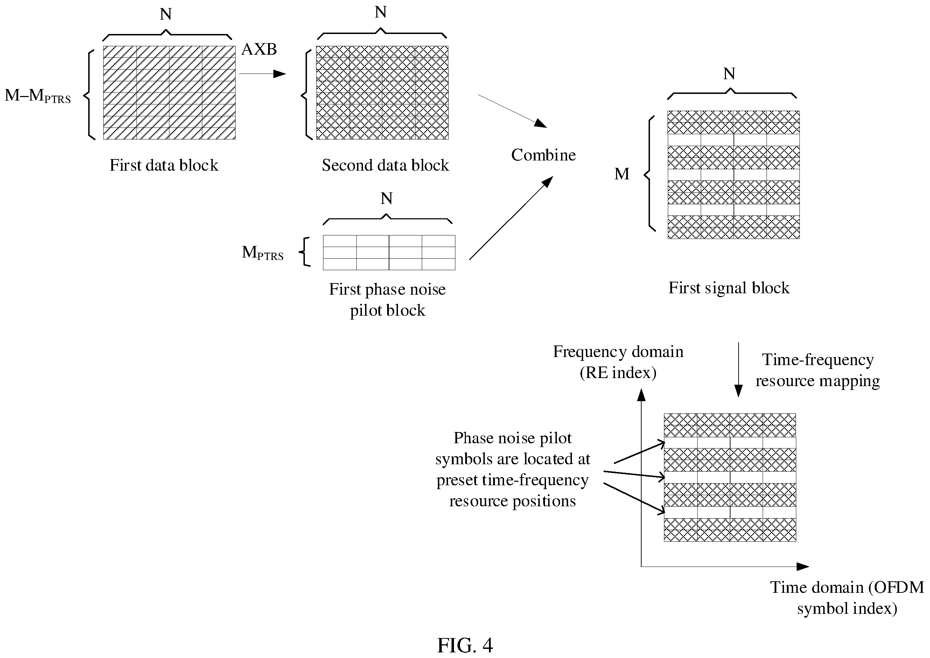

Refer to FIG. 4. The first data block may be represented in a form of two-dimensional matrix being $(M - M_{PTRS}) \times N$ dimensional, for example, $X_{data}$, where $X_{data} \in C^{(M-M_{PTRS}),N}$.

BM-OCDM encoding is performed on $X_{data}$, that is, $S_{data} = F^H_{M-M_{PTRS}} \wedge F_{M-M_{PTRS}} X_{data} F^H_N$, to obtain the

second data block $S_{data}$.

The first phase noise pilot block is represented in a form of two-dimensional matrix of $M_{PTRS} \times N$, for example, $X_{PTRS}$, where $X_{PTRS} \in C^{M_{PTRS},N}$.

The first signal block obtained by combining the first data block and the second data block is represented as a two-dimensional matrix $S_{total}$ being $M \times N$ dimensional, where total = $S_{data} \cup X_{PTRS}$, and $S_{total} \in C^{M,N}$.

Fourier transform is performed on $S_{total}$: $Y = F_M S_{total}$.

After zero-padding is performed on Y, inverse Fourier transform (for example, IFFT) is performed on $M_{FFT}$ points (where $M_{FFT}$ represents a data length after zero-padding is performed on Y), and the points are transformed to time domain, to form the time-domain signal for transmission. The transmitted signal R may be represented as:

$$R = F_{FFT}^H \begin{bmatrix} 0_{(M_{FTT} - M)/2} \\ Y \\ 0_{(M_{FTT} - M)/2} \end{bmatrix}$$

$F_{FFT}^H$ represents performing inverse Fourier transform on the $M_{FFT}$ points.

When the phase noise pilot is added in time domain, after the first phase noise pilot block is transformed to frequency domain, a pilot signal in frequency domain is a known signal.

It can be learned from the foregoing that each symbol (or each element) in the first signal block or the second signal block and each symbol in the second phase noise pilot block correspond to one determined time-frequency resource in time domain and frequency domain (for example, correspond to one OFDM symbol in time domain and correspond to one RE in frequency domain). Therefore, after the first phase noise pilot block is transformed to frequency domain, a pilot signal in frequency domain is a known signal. This may also be described as follows: A pilot signal of the first phase noise pilot block causes a value of the second signal block at a first frequency domain position index to be a third reference signal.

The first frequency domain position index is a second preset index. The second preset index may be specified in a protocol, pre-configured, notified by network signaling, agreed on by a transmit end or a receive end, or the like. This is not limited in this application.

The third reference signal is a known signal, and the third reference signal may be specifically related to at least one of a user identifier (Identity document, ID), a quantity of frequency domain resources of a user, a quantity of phase noise pilots of the user, and the like. This is not limited in this application.

As shown in FIG. 4, phase noise pilot symbols are located at preset time-frequency resource positions (for example, an index of an RE used by the phase noise pilot symbol is a preset RE index). In other words, symbols carried at these preset time-frequency resource positions are the phase noise pilot symbols.

In a possible design, a phase noise pilot may be added in frequency domain. In other words, the first phase noise pilot block and the second data block are signals in frequency domain. Mapping the first phase noise pilot block and the second data block to the time-frequency resources for transmission includes: combining the first phase noise pilot block and the second data block into the first signal block, and mapping the first signal block to the time-frequency resource for transmission. Mapping the first signal block to the time-frequency resource for transmission may specifically include: mapping the first signal block to a subcarrier to obtain a frequency-domain signal, and then performing inverse Fourier transform on the frequency-domain signal to form the time-domain signal, and sending the time-domain signal.

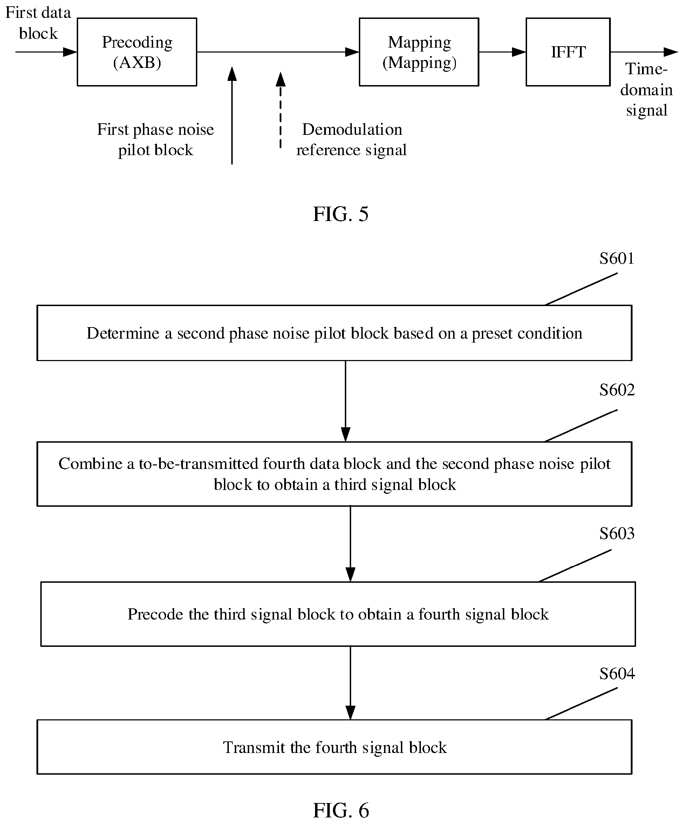

For example, FIG. 5 is a diagram of a signal processing procedure. The first data block is precoded (for example, by using BM-OCDM encoding) to obtain the second data block. The first data block and the first phase noise pilot are combined together, and then processing such as mapping (that is, subcarrier mapping) and inverse Fourier transform (IFFT) is performed to form the time-domain signal, and the time-domain signal is sent. Optionally, after precoding and before mapping is performed, a demodulation reference signal may be further added.

An example in which the second data block includes $(M - M_{PTRS}) \times N$ data symbols and the first phase noise pilot block includes $M_{PTRS} \times N$ pilot symbols is still used. M is a sum of a quantity of subcarriers used to transmit the second data block and a quantity of subcarriers used to transmit the first phase noise pilot block, and M, $M_{PTRS}$, and N are positive integers. Mapping the first phase noise pilot block and the second data block to the time-frequency resources for transmission includes: configuring $M_{PTRS}$ pilot symbols and $(M - M_{PTRS})$ data symbols on each of N orthogonal frequency division multiplexing OFDM symbols. The $M_{PTRS}$ pilot symbols are evenly spaced apart on the OFDM symbol. For example, one pilot symbol is configured after every $\Delta$ data symbols.

During specific implementation, M may be obtained by subtracting, from a total quantity of allocated subcarriers (a quantity of subcarriers included in a bandwidth), a quantity of subcarriers (for example, guard subcarriers) that cannot be used to transmit data and a pilot.

Optionally, when the phase noise pilot is added in frequency domain, a pilot signal of the first phase noise pilot block is a known signal in frequency domain. For example, the pilot signal of the first phase noise pilot block is a first reference signal, and the first reference signal is related to at least one of a user ID, a quantity of frequency domain resources of a user, a quantity of phase noise pilots of the user, and the like. As shown in FIG. 4, phase noise pilot symbols are located at preset time-frequency resource positions (for example, an index of an RE used by the phase noise pilot symbol is a preset RE index). In other words, signals carried at these preset time-frequency resource positions are the phase noise pilot symbols.

Optionally, when the phase noise pilot is added in frequency domain, after the first phase noise pilot block is transformed to time domain, the pilot signal in time domain is a known signal. For example, the pilot signal of the first phase noise pilot block causes a value of a third data block at a first time domain position index to be a second reference signal, the third data block is obtained by performing inverse Fourier transform on the second data block, the first time domain position index is a first preset index, and the second reference signal is related to at least one of a user ID, a quantity of frequency domain resources of a user, and a quantity of phase noise pilots of the user. The first preset index may be specified in a protocol, pre-configured, notified by network signaling, agreed on by a transmit end or a receive end, or the like. This is not limited in this application.

In a possible design, symbols in a first phase noise pilot block $X_{PTRS}$ are determined values, and are all a same value. For example,

$$X_{PTRS} = \begin{bmatrix} b & ... & b \\ \vdots & \ddots & \vdots \\ b & ... & b \end{bmatrix}$$

b is a constant, and a value of b may be set as required in a specific system.

For example, to ensure that a peak-to-average ratio (peak-to-average ratio, PAPR) of the system does not deteriorate, the value b may be set to equal to a largest absolute value in a second data block $X_{QAM}$. If 64-QAM modulation is used, in $X_{QAM}$, a value of an element may be 1+1i, 3+3i, 7+7i, or the like. However, it is clear that an absolute value of 7+7i is the largest. Therefore, b may be set to 7+7i.

In the foregoing solution, the data is precoded, and the precoded data and the phase noise pilot are separately mapped to different time-frequency resources. Therefore, the phase noise pilot can be sent when the data is sent, so that the receive end can mitigate or even eliminate impact of the phase noise, and reliability of data transmission can be improved.

FIG. 6 is a flowchart of another signal transmission method according to an embodiment of this application. Different from the method shown in FIG. 2, in the method, a phase noise pilot needs to participate in precoding. The method may be applied to the communication scenario shown in FIG. 1A, FIG. 1B, or FIG. 1C, or another communication scenario. This is not limited in this application. The method may be performed by a signal sender. The signal sender may be any device (such as a satellite, a terminal, or a base station) that needs to send a signal. The method includes the following steps.

S601: Determine a second phase noise pilot block based on a preset condition.

Specifically, a value of each pilot symbol in the second phase noise pilot block needs to be determined based on the preset condition.

S602: Combine a to-be-transmitted fourth data block and the second phase noise pilot block to obtain a third signal block.

Further, a position of each phase noise symbol in the combined third signal block may be determined based on the preset condition.

S603: Precode the third signal block to obtain a fourth signal block.

There may be a plurality of precoding manners, for example, orthogonal frequency division multiplexing (orthogonal frequency division multiplexing, OFDM), BM-OCDM, or another encoding manner. For ease of description, the following uses BM-OCDM encoding as an example. To be specific, A and B are not identity matrices. For a BM-OCDM encoding principle, refer to the foregoing related description. Details are not described herein again.

S604: Transmit the fourth signal block.

Specifically, the fourth signal block is mapped to time-frequency resources, a time-domain signal is formed through inverse Fourier transform, and the time-domain signal is sent. The sent signal includes a signal (referred to as a data signal) corresponding to a data symbol and a signal (referred to as a pilot signal) corresponding to a phase noise pilot symbol.

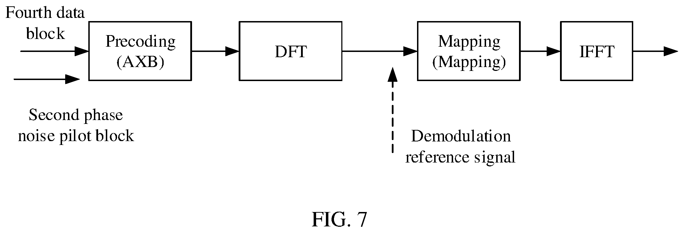

FIG. 7 is a flowchart of signal processing. Processing such as precoding (for example, BM-OCDM encoding), Fourier transform (DFT), mapping, and inverse Fourier transform (IFFT) is sequentially performed on the third signal block obtained by combining the fourth data block and the second phase noise pilot block, to form a time-domain signal, and the time-domain signal is sent.

In this embodiment of this application, a time-frequency resource of the second phase noise pilot block is different from a time-frequency resource of the fourth data block. Each symbol (or each element) in the third signal block (or the fourth signal block) corresponds to one determined time-frequency resource in time domain and frequency domain. Time-frequency resources of 5G NR are used as an example. Each symbol (or each element) in the third signal block (or the fourth signal block) corresponds to one OFDM symbol in time domain and corresponds to one RE in frequency domain.

The preset condition includes: In the finally sent signal, a time-frequency resource position of a phase noise pilot signal is a preset time-frequency resource position.

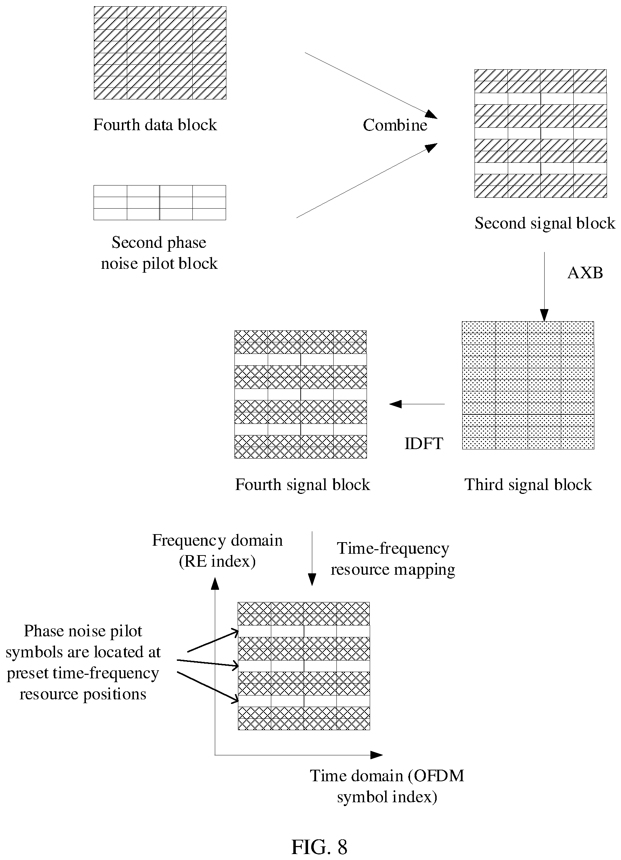

FIG. 8 is a diagram of forming a fourth signal block. In FIG. 8, different patterns are used to distinguish between the data symbol and the phase noise pilot symbol. In the fourth signal block, a shaded part represents the data symbol, and a non-shaded part represents the phase noise pilot symbol. When the fourth signal block is mapped to the time-frequency resource, a resource position of the phase noise pilot symbol is at the preset time-frequency resource position.

In a possible design, the fourth signal block is a signal in frequency domain. The preset condition includes: After the second phase noise pilot block is precoded, a pilot signal in frequency domain is a known signal.

It can be learned from the foregoing that each symbol (or each element) in the third signal block (or the fourth signal block) corresponds to one determined time-frequency resource in time domain and frequency domain. Therefore, that after the second phase noise pilot block is precoded, a pilot signal in frequency domain is a known signal may also be described as follows: A value of the fourth signal block at a second frequency domain position index is a fourth reference signal. The fourth reference signal is related to at least one of a user ID, a quantity of frequency domain resources of a user, a quantity of phase noise pilots of the user, and the like. The second frequency domain position index is a third preset index. The third preset index may be specified in a protocol, pre-configured, notified by network signaling, agreed on by a transmit end or a receive end, or the like. This is not limited in this application.

In a possible design, the fourth signal block is a signal in frequency domain. The preset condition includes: After inverse Fourier transform is performed on the second phase noise pilot block, a pilot signal in time domain is a known signal.

Similarly, that after inverse Fourier transform is performed on the second phase noise pilot block, a pilot signal in time domain is a known signal may also be described as follows: A value of a fifth signal block at a second time domain position index is a fifth reference signal, and the fifth signal block is obtained by performing inverse Fourier transform on the fourth signal block. The fifth reference signal is related to at least one of a user ID, a quantity of frequency domain resources of a user, a quantity of phase noise pilots of the user, and the like. The second time domain position index is a fourth preset index. The fourth preset index may be specified in a protocol, pre-configured, notified by network signaling, agreed on by a transmit end or a receive end, or the like. This is not limited in this application.

In a possible design, the fourth signal block is a signal in time domain. Transmitting the fourth signal block includes: performing Fourier transform on the fourth signal block to obtain a sixth signal block; and transmitting the sixth signal block. The preset condition includes: A pilot signal of the second phase noise pilot block is a known signal.

Similarly, that a pilot signal of the second phase noise pilot block is a known signal may also be described as follows: The value of the fourth signal block at a second time domain position index is a fifth reference signal. The fifth reference signal is related to at least one of a user ID, a quantity of frequency domain resources of a user, a quantity of phase noise pilots of the user, and the like. The second time domain position index is a fourth preset index. The fourth preset index may be specified in a protocol, pre-configured, notified by network signaling, agreed on by a transmit end or a receive end, or the like. This is not limited in this application.

To better understand the solution, the following describes a process of determining the second phase noise pilot block in a form of matrix.

The following parameters are defined first.

$F_M$ represents a Fourier transform matrix being M*M dimensional, and an element in an $n^{th}$ row and a $k^{th}$ column of the matrix is represented as $\{F_M\}_{n,k} = \frac{1}{\sqrt{N}} \exp\left(-j2\pi \frac{nk}{M}\right)$.

M: Quantity of REs (resource element). A specific value is equal to a sum of a quantity of subcarriers used to transmit the fourth data block and a quantity of subcarriers used to transmit the second phase noise pilot block.

N: Quantity of transmitted OFDM symbols.

$M_{PTRS}$: Quantity of transmitted phase noise pilot symbols, where $M_{PTRS} \ll M$ is satisfied. The symbol "«" mathematically represents far less than.

M, $M_{PTRS}$, and N are positive integers.

An existing 5G NR standard is used as an example, and there is a configuration: $M_{PTRS} = 21$, and $M = 512$.

$Index_{PTRS}$: Position index of the phase noise pilot symbol in M REs, for example, the second frequency domain position index or the second time domain position index described above.

$M_{PTRS}$ phase noise pilot symbols are evenly spaced apart at equal spacings on one OFDM symbol. It is assumed that the spacing is $\Delta$ = M/$M_{PTRS}$. In this case, $Index_{PTRS}$ = {1, $\Delta$ + 1, 2$\Delta$ + 1, ..., ($M_{PTRS}$ - 1)$\Delta$ + 1}.

$C^{MPTRS \times M}$: It mathematically defines a matrix as $M_{PTRS} \times M$ dimensional. $M_{PTRS}$ is a quantity of rows of the matrix, M is a quantity of columns of the matrix, and an element in the matrix is a rational number.

For ease of description below, a new matrix formed by a product $F_M^H A$ of two matrices is defined as:

$$P = F_M^H A$$

The matrix P is M $\times$ M dimensional. To be specific, there are M rows and M columns. An element in an $n^{th}$ row and a $k^{th}$ column of the matrix P is $\{P\}_{n,k} = \frac{1}{\sqrt{M}} \sum_{i=0}^{M-1} \exp(j2\pi \frac{ni}{M})\{P\}_{i,k}$ .

A $\Delta^{th}$ row of the matrix P is defined as P($\Delta$,:). P($\Delta$,:) is a row vector whose length is N.

A first column of a matrix X is defined as X(:,1). X(:,1) is a column vector whose length is M. By analogy, X(:, n) represents an $n^{th}$ column vector in the matrix X.

Based on the foregoing parameters, the second phase noise pilot block includes $M_{PTRS} \times N$ pilot symbols, and may be represented as a first matrix $X_{QAM}$ being $M_{PTRS} \times N$ dimensional. The fourth data block includes (M - $M_{PTRS}$) $\times$ N data symbols, and may be represented as a second matrix $X_{PTRS}$ being (M - $M_{PTRS}$) $\times$ N dimensional. A third signal block obtained by combining the second phase noise pilot block and the fourth data block may be represented as a third matrix X being M $\times$ N dimensional. X $\in$ C$^{M,N}$, X is M*N dimensional, and elements in the matrix include the data symbols and the phase noise pilot symbols.

BM-OCDM encoding and inverse Fourier transform are performed on the third signal block, which may be represented as:

$$F_M^H AXB = F_M^H A(X_{QAM} + X_{PTRS})B = \tilde{S}$$

$F_M^H$ represents inverse Fourier transform is performed on each column of the matrix X. $\tilde{S}$ represents finally transmitted signals, including a data signal $\tilde{S}_{data}$ and a phase noise pilot signal

$$\tilde{S}_{PTRS} \text{, that is, } \tilde{S} = \tilde{S}_{data} + \tilde{S}_{PTRS} .$$

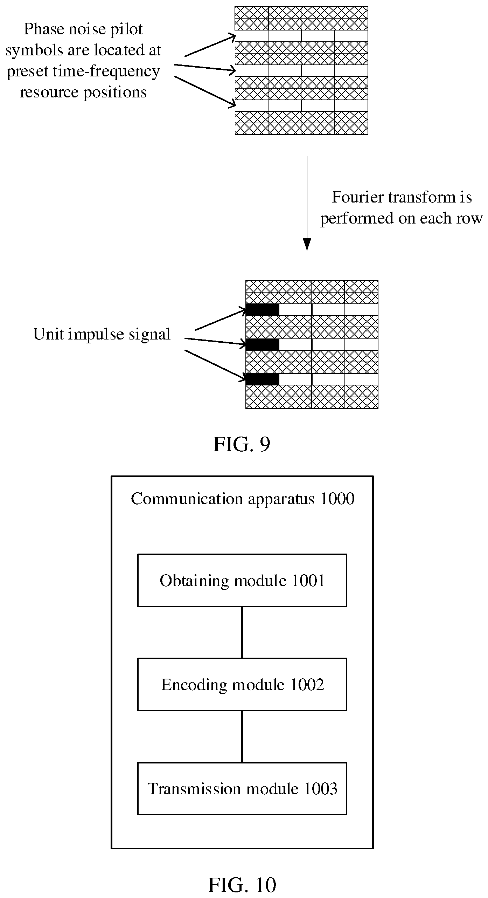

Refer to FIG. 9. Fourier transform is performed on each row of the finally transmitted signals $\tilde{S}$ to obtain signals S, where $S = S_{data} + S_{PTRS}$. In the obtained signals S, a pilot signal is a unit impulse signal. By using this feature, the following equation may be used to solve for $X_{PTRS}$:

$$F_M^H A(X_{QAM} + X_{PTRS}) = S_{data} + S_{PTRS}$$

$M_{PTRS} \times N$ to-be-solved unknown numbers are included in $X_{PTRS}$. In other words, there are N columns of unknown variables, and there are $M_{PTRS}$ to-be-solved unknown numbers in each column of unknown variables.

According to $P = F_M^H A$ , the equation $F_M^H A(X_{QAM} + X_{PTRS}) = S_{data} + S_{PTRS}$ may be represented as:

$P(X_{QAM} + X_{PTRS}) = S_{data} + S_{PTRS}$. The matrix $S_{PTRS}$ is $M_{PTRS} \times N$ dimensional. To be specific, the matrix has $M_{PTRS}$ rows and N columns.

In this embodiment of this application, the finally transmitted pilot signal is a known signal (that is, a time-frequency domain position is known and a value is known). Therefore, $S_{PTRS}$ may be represented as:

$$S_{PTRS} = \begin{bmatrix} a & 0 & 0 & 0 \\ a & 0 & 0 & 0 \\ \vdots & \vdots & \vdots & \vdots \\ a & 0 & 0 & 0 \end{bmatrix}$$

In the matrix $S_{PTRS}$, only one column is a constant. Each element in a first column is $a$. A value of $a$ is related to a system parameter. The 5G NR is used as an example. It is assumed that N=14. In this case, the value of $a$ may be 14, and elements in other columns are all 0.

The following describes a method for solving for first columns of unknown variables (that is, $X_{PTRS}(:,1)$, where $X_{PTRS}(:,1)$ is a column vector whose length is $M_{PTRS}$) in $X_{PTRS}$.

1st, and $(\Delta + 1)^{th}$, $(2\Delta + 1)^{th}$, ..., and $((M_{PTRS} - 1)\Delta + 1)^{th}$ row vectors (a length of each row vector is M) of the matrix P are extracted to form a submatrix $\overline{P}$.

$$\overline{P} = \begin{bmatrix} P(1, :) \\ P(\Delta + 1, :) \\ \vdots \\ P((M_{PTRS} - 1)\Delta + 1, :) \end{bmatrix}$$

The submatrix $\overline{P}$ is $M_{PTRS} \times M$ dimensional. To be specific, the matrix $\overline{P}$ has $M_{PTRS}$ rows and M columns.

The matrix $\overline{P}$ and a first column of the matrix X are multiplied, to obtain a first column of $S_{PTRS}$, that is:

$$\overline{P}X(1, :) = S_{PTRS}(1, :) = \begin{bmatrix} a \\ a \\ \vdots \\ a \end{bmatrix}$$

X(:,1) is a column vector whose length is M.

Because $X_{QAM}(:,1)$ and $X_{PTRS}(:,1)$ are included in the column X(:,1), the column vector X(:,1) may be determined based on a position index $Index_{PTRS}$.

$$
X(1,:) = \begin{bmatrix} X_{PTRS}(1,1) \\ X_{QAM}(1,1) \\ X_{QAM}(2,1) \\ \vdots \\ X_{QAM}(\Delta,1) \\ X_{PTRS}(2,1) \\ X_{QAM}(\Delta + 1,1) \\ X_{QAM}(\Delta + 2,1) \\ \vdots \\ X_{PTRS}(3,1) \\ X_{QAM}(2\Delta,1) \\ X_{QAM}(2\Delta + 1,1) \\ \vdots \\ X_{PTRS}(4,1) \\ X_{QAM}(3\Delta,1) \\ \vdots \\ \vdots \\ X_{PTRS}(M_{PTRS},1) \\ X_{QAM}((M_{PTRS} - 1)\,\Delta,1) \\ \vdots \\ X_{QAM}(M - M_{PTRS},1) \end{bmatrix}
\qquad \text{(Formula 1)}
$$

In the column vector X(:,1), there are $M_{PTRS}$ phase noise pilot symbols, which are arranged at a spacing of $\Delta$. A data symbol is between two adjacent phase noise pilot symbols.

The matrix $\overline{P}$ is further split. Specifically, the matrix is split, based on rows of $\overline{P}$, into two submatrices, which respectively correspond to positions corresponding to PTRS and data in $X(:,1)$. The matrix $\overline{P}$ ($\overline{P}$ has $M_{PTRS}$ rows and M columns) may be represented as:

$$
\overline{P} = \begin{bmatrix} P(1,1) & P(1,2) & \cdots & P(1, \Delta + 1) & P(1, \Delta + 2) & \cdots & P(1, M) \\ P(\Delta + 1,1) & P(\Delta + 1,2) & \cdots & P(\Delta + 1, \Delta + 1) & P(\Delta + 1, \Delta + 2) & \cdots & P(\Delta + 1, M) \\ \vdots & \vdots & & \vdots & \vdots & & \vdots \\ \vdots & \vdots & & \vdots & \vdots & & \vdots \\ P((M_{PTRS} - 1)\,\Delta,1) & P((M_{PTRS} - 1)\,\Delta,2) & \cdots & P((M_{PTRS} - 1)\,\Delta, \Delta + 1) & P((M_{PTRS} - 1)\,\Delta, \Delta + 2) & \cdots & P((M_{PTRS} - 1)\,\Delta, M) \end{bmatrix}
$$

$M_{PTRS}$ columns are extracted from the M columns of $\overline{P}$ at a spacing of $\Delta$, to form a submatrix $\overline{P}_{PTRS}$ ($\overline{P}_{PTRS}$ is $M_{PTRS} \times M_{PTRS}$ dimensional. To be specific, there are both $M_{PTRS}$ rows and columns):

$$
\overline{P}_{PTRS} = \begin{bmatrix} P(1,1) & P(1, \Delta + 2) & \cdots & P(1, (\Delta + 1)(M_{PTRS} - 1)) \\ P(\Delta + 1,1) & P(\Delta + 1, \Delta + 2) & \cdots & P((\Delta + 1, (\Delta + 1)(M_{PTRS} - 1)) \\ \vdots & \vdots & & \vdots \\ \vdots & \vdots & & \vdots \\ P((M_{PTRS} - 1)\,\Delta,1) & P((M_{PTRS} - 1)\,\Delta, \Delta + 2) & \cdots & P((M_{PTRS} - 1)\,\Delta, )(\Delta + 1)(M_{PTRS} - 1)) \end{bmatrix}
$$

In $\overline{P}$, remaining elements other than elements in $\overline{P}_{PTRS}$ form a second submatrix, which corresponds to a data part $\overline{P}_{data}$:

$$\overline{P_{\text{data}}} = \begin{bmatrix} P(1,2) & P(1,3) & P(1, \Delta+1) & \cdots & P(1, M) \\ P(\Delta+1,2) & P(\Delta+1,3) & P(\Delta+1, \Delta+1) & \cdots & P(\Delta+1, M) \\ \vdots & \vdots & \vdots & & \vdots \\ \vdots & \vdots & \vdots & & \vdots \\ P((M_{PTRS}-1)\Delta,2) & P((M_{PTRS}-1)\Delta,3) & P((M_{PTRS}-1)\Delta, \Delta+1) & \cdots & P((M_{PTRS}-1)\Delta, M) \end{bmatrix}$$

The second submatrix $\overline{P}_{data}$ is $M_{PTRS} \times (M - M_{PTRS})$ dimensional. To be specific, there are $M_{PTRS}$ rows and M -

$$\overline{P}X(1,:) = S_{PTRS}(1,:) = \begin{bmatrix} a \\ a \\ \vdots \\ a \end{bmatrix}$$

$M_{PTRS}$ columns. may be represented as:

$$\overline{P_{PTRS}}X_{PTRS}(1,:) + \overline{P_{data}}X_{QAM}(1,:) = \begin{bmatrix} a \\ a \\ \vdots \\ a \end{bmatrix}.$$

Therefore, $X_{PTRS}(:,1)$ may be formed by extracting corresponding elements from $X(:,1)$ in Formula 1, and has a length of $M_{PTRS}$, that is:

$$X_{PTRS}(1,:) = \begin{bmatrix} X_{PTRS}(1,1) \\ X_{PTRS}(2,1) \\ \vdots \\ \vdots \\ X_{PTRS}(M_{PTRS},1) \end{bmatrix}$$

$X_{QAM}(:,1)$ may be formed by extracting corresponding elements from $X(:,1)$ in Formula 1, and has a length of M - $M_{PTRS}$, that is:

$$X_{QAM}(1,:) = \begin{bmatrix} X_{QAM}(1,1) \\ \vdots \\ X_{QAM}(\Delta,1) \\ X_{QAM}(\Delta+1,1) \\ \vdots \\ \vdots \\ X_{QAM}(M - M_{PTRS},1) \end{bmatrix}$$

In conclusion, the first column $X_{PTRS}(:,1)$ may be calculated as follows:

$$X_{PTRS}(:,1) = (\overline{P}_{PTRS})^{-1}\left(\begin{bmatrix} a \\ a \\ \vdots \\ a \end{bmatrix} - \overline{P}_{data}X_{QAM}(:,1)\right) \qquad \text{(Formula 2)}$$

$(\overline{P}_{PTRS})^{-1}$ represents inversion of the matrix $\overline{P}_{PTRS}$.

The following describes a method for solving for second columns of unknown variables (that is, $X_{PTRS}(:,2)$) in $X_{PTRS}$.

Only an all- $a$ vector in Formula 2 needs to be replaced with an all-0 vector, and data corresponding to $X_{QAM}(:,1)$ needs to be replaced with a second column of data $X_{QAM}(:,2)$, that is:

$$X_{PTRS}(:,2) = (\overline{P}_{PTRS})^{-1}\left(\begin{bmatrix} 0 \\ 0 \\ \vdots \\ 0 \end{bmatrix} - \overline{P}_{data}X_{QAM}(:,2)\right);$$

and

$$X_{QAM}(:,2) = \begin{bmatrix} X_{QAM}(1,2) \\ \vdots \\ X_{QAM}(\Delta,2) \\ X_{QAM}(\Delta+1,2) \\ \vdots \\ \vdots \\ X_{QAM}(M-M_{PTRS},2) \end{bmatrix}$$

For another column of data, refer to a solution rule of the second column of data, and the second column to an $N^{th}$ column of data may be obtained, that is:

$$X_{PTRS}(:,n) = (\overline{P}_{PTRS})^{-1}\left(\begin{bmatrix} 0 \\ 0 \\ \vdots \\ 0 \end{bmatrix} - \overline{P}_{data}X_{QAM}(:,n)\right)$$

$$X_{QAM}(:,N) = \begin{bmatrix} X_{QAM}(1,n) \\ \vdots \\ X_{QAM}(\Delta,n) \\ X_{QAM}(\Delta+1,n) \\ \vdots \\ \vdots \\ X_{QAM}(M-M_{PTRS},n) \end{bmatrix},$$

and a value of n is a positive integer between 2 and N.

It may be understood that the foregoing method for solving for a phase noise pilot may also be applied to a scenario in which a phase noise pilot is added in frequency domain, and a pilot signal in time domain is a known signal after a first phase noise pilot block is transformed to time domain in the embodiment shown in FIG. 2.

In the foregoing solution, the phase noise pilot and the data are combined and then precoded, and precoded data is mapped to the time-frequency resource. Therefore, the phase noise pilot can be sent when the data is sent, so that the receive end can mitigate or even eliminate impact of the phase noise, and reliability of data transmission can be improved.

The foregoing describes the method provided in embodiments of this application, and the following describes an apparatus provided in embodiments of this application.

FIG. 10, FIG. 11, and FIG. 12 each are a diagram of a structure of a possible communication apparatus according to an embodiment of this application. These communication apparatuses may be configured to implement the function of the signal sender (such as a satellite, a terminal, or a base station) in the foregoing method embodiments, and therefore can also implement beneficial effect of the foregoing method embodiments.

As shown in FIG. 10, a communication apparatus 1000 includes an obtaining module 1001, an encoding module 1002, and a transmission module 1003. The communication apparatus 1000 is configured to implement the function of the signal sender (such as a satellite, a terminal, or a base station) in the method embodiment shown in FIG. 2.

For example, the obtaining module 1001 is configured to obtain a first data block. The encoding module 1002 is configured to precode the first data block to obtain a second data block. The transmission module 1003 is configured to map a first phase noise pilot block and the second data block to time-frequency resources for transmission.

For a more detailed description about each module, directly refer to the related description in the method embodiment shown in FIG. 2. Details are not described herein again.

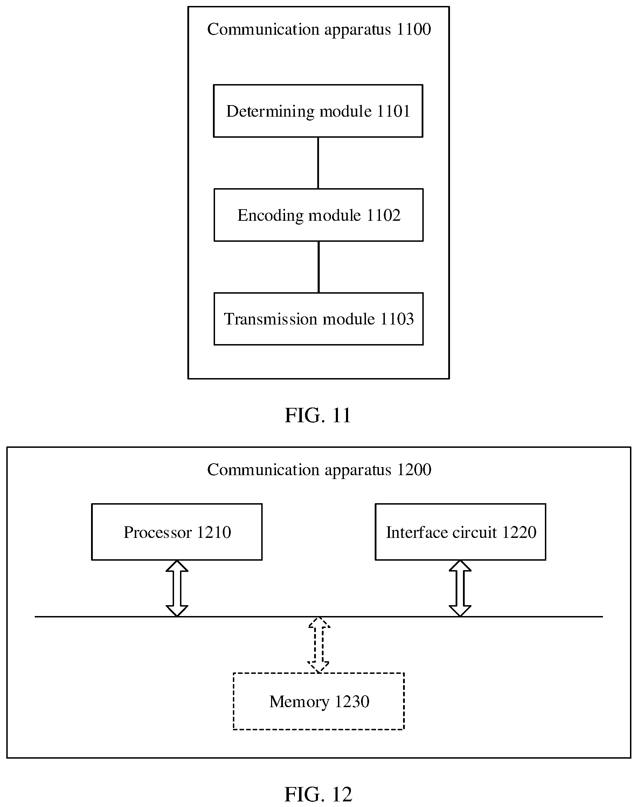

As shown in FIG. 11, a communication apparatus 1100 includes a determining module 1101, an encoding module 1102, and a transmission module 1103. The communication apparatus 1100 is configured to implement the function of the signal sender (such as a satellite, a terminal, or a base station) in the method embodiment shown in FIG. 6.

For example, the determining module 1101 is configured to determine a second phase noise pilot block based on a preset condition. The encoding module 1102 is configured to: combine a to-be-transmitted fourth data block and the second phase noise pilot block to obtain a third signal block, and precode the third signal block to obtain a fourth signal block. The transmission module 1103 is configured to transmit the fourth signal block.

For a more detailed description about each module, directly refer to the related description in the method embodiment shown in FIG. 6. Details are not described herein again.

As shown in FIG. 12, a communication apparatus 1200 includes a processor 1210 and an interface circuit 1220. The interface circuit 1220 may receive a signal from a communication apparatus other than the communication apparatus 1200 and transmit the signal to the processor 1210, or send a signal from the processor 1210 to a communication apparatus other than the communication apparatus 1200. The processor 1210 is configured to implement the method steps described in the foregoing method embodiments by using a logic circuit or by executing code instructions.

It may be understood that the processor 1210 and the interface circuit 1220 are coupled to each other. The interface circuit 1220 may be a transceiver or an input/output interface. Optionally, the communication apparatus 1200 may further include a memory 1230, configured to: store instructions executed by the processor 1210, store input data required by the processor 1210 to run the instructions, or store data generated after the processor 1210 runs the instructions.

Optionally, the memory 1230 and the processor 1210 may be integrated.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist in a base station or terminal as discrete components.

All or some of the foregoing embodiments may be implemented by using software, hardware, firmware, or any combination thereof. When the software is used to implement the embodiments, all or some of the embodiments may be implemented in a form of computer program product. The computer program product includes one or more computer programs or instructions. When the computer program or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists. A and B may be singular or plural. In the text description of this application, the character "/" generally indicates an "or" relationship between the associated objects. In a formula in this application, the character "/" indicates a "division" relationship between the associated objects. "Including at least one of A, B, and C" may indicate: including A, including B, including C, including A and B, including A and C, including B and C, and including A, B, and C.

It may be understood that various numbers in embodiments of this application are merely used for differentiation for ease of description, and are not intended to limit the scope of embodiments of this application. The sequence numbers of the foregoing processes do not mean an execution sequence. The execution sequence of the processes should be determined based on functions and internal logic of the processes.

**Claims**

1. A signal transmission method, comprising:

   obtaining a first data block;
   precoding the first data block to obtain a second data block; and
   mapping a first phase noise pilot block and the second data block to time-frequency resources for transmission.

2. The method according to claim 1, wherein the second data block comprises $(M - M_{PTRS}) \times N$ data symbols, the first phase noise pilot block comprises $M_{PTRS} \times N$ pilot symbols, M is a sum of a quantity of subcarriers used to transmit the second data block and a quantity of subcarriers used to transmit the first phase noise pilot block, and M, $M_{PTRS}$, and N are positive integers; and
   the mapping a first phase noise pilot block and the second data block to time-frequency resources for transmission comprises:
   configuring $M_{PTRS}$ pilot symbols and $(M - M_{PTRS})$ data symbols on each of N orthogonal frequency division multiplexing OFDM symbols.

3. The method according to claim 2, wherein the $M_{PTRS}$ pilot symbols are evenly spaced apart on the OFDM symbol.

4. The method according to claim 2 or 3, wherein a pilot signal of the first phase noise pilot block is a first reference signal, and the first reference signal is related to at least one of a user identifier ID, a quantity of frequency domain resources of a user, or a quantity of phase noise pilots of the user.

5. The method according to claim 2 or 3, wherein a pilot signal of the first phase noise pilot block causes a value of a third data block at a first time domain position index to be a second reference signal, the third data block is obtained by performing inverse Fourier transform on the second data block, the first time domain position index is a first preset index, and the second reference signal is related to at least one of a user ID, a quantity of frequency domain resources of a user, and a quantity of phase noise pilots of the user.

6. The method according to claim 1, wherein the mapping a first phase noise pilot block and the second data block to time-frequency resources for transmission comprises:
combining the first phase noise pilot block and the second data block into a first signal block; and performing Fourier transform on the first signal block to obtain a second signal block, and mapping the second signal block to the time-frequency resource for transmission, wherein a pilot signal of the first phase noise pilot block causes a value of the second signal block at a first frequency domain position index to be a third reference signal, the first frequency domain position index is a second preset index, and the third reference signal is related to at least one of a user ID, a quantity of frequency domain resources of a user, and a quantity of phase noise pilots of the user.

7. The method according to any one of claims 1 to 6, wherein a time-frequency resource of the first phase noise pilot block is different from a time-frequency resource of the second data block.

8. The method according to any one of claims 1 to 7, wherein the precoding the first data block comprises:
precoding the first data block by using a block multiplexing BM-orthogonal chirp division multiplexing OCDM encoding technology or an OFDM technology.

9. The method according to claim 5, wherein the first phase noise pilot block comprises $M_{PTRS} \times N$ pilot symbols and is represented as a first matrix being $M_{PTRS} \times N$ dimensional, the first data block comprises $(M - M_{PTRS}) \times N$ data symbols and is represented as a second matrix being $(M - M_{PTRS}) \times N$ dimensional, M is a sum of a quantity of subcarriers used to transmit the first data block and a quantity of subcarriers used to transmit the first phase noise pilot block, N is a quantity of OFDM symbols, and M, $M_{PTRS}$, and N are positive integers;

a first column vector $X_{PTRS}(:,1)$ in the first matrix meets the following relationship:

$$X_{PTRS}(:,1) = (\overline{P}_{PTRS})^{-1}\left(\begin{bmatrix} a \\ a \\ \vdots \\ a \end{bmatrix} - \overline{P}_{data} X_{QAM}(:,1)\right),$$

wherein
$X_{QAM}(:,1)$ is a first column vector in the second matrix;
$\begin{bmatrix} a \\ a \\ \vdots \\ a \end{bmatrix}$ is a matrix being $M_{PTRS}$ dimensional, and $a$ is a preset value;
$\overline{P}_{PTRS}$ is a submatrix extracted from a matrix $P$ based on the first time domain position index, the matrix $P = F_M^H \times A$, $A = F_M^H \wedge F_M$, $F_M^H$ represents a conjugate transpose of a matrix $F_M$, $\wedge$ represents a diagonal matrix being M*M dimensional, and $F_M$ represents a Fourier transform matrix being M*M dimensional;
$\overline{P}_{data}$ is a submatrix formed by an element remaining after the submatrix $\overline{P}_{PTRS}$ is extracted from the matrix P; and
an $n^{th}$ column vector $X_{PTRS}(:,n)$ in the first matrix meets the following relationship:

$$X_{PTRS}(:,n) = (\overline{P}_{PTRS})^{-1}\left(\begin{bmatrix} 0 \\ 0 \\ \vdots \\ 0 \end{bmatrix} - \overline{P}_{data} X_{QAM}(:,n)\right),$$

wherein
$X_{QAM}(:,n)$ is an $n^{th}$ column vector in the second matrix, and a value of n is a positive integer between 2 and N.

10. A signal transmission method, comprising:

determining a second phase noise pilot block based on a preset condition;
combining a to-be-transmitted fourth data block and the second phase noise pilot block to obtain a third signal block;
precoding the third signal block to obtain a fourth signal block; and
transmitting the fourth signal block.

11. The method according to claim 10, wherein the preset condition comprises: a value of the fourth signal block at a second frequency domain position index is a fourth reference signal, the fourth reference signal is related to at least one of a user ID, a quantity of frequency domain resources of a user, and a quantity of phase noise pilots of the user, and the second frequency domain position index is a third preset index.

12. The method according to claim 10, wherein the preset condition comprises: a value of a fifth signal block at a second time domain position index is a fifth reference signal, the fifth signal block is obtained by performing inverse Fourier transform on the fourth signal block, the second time domain position index is a fourth preset index, and the fifth reference signal is related to at least one of a user ID, a quantity of frequency domain resources of a user, and a quantity of phase noise pilots of the user.

13. The method according to claim 10, wherein the transmitting the fourth signal block comprises:

performing Fourier transform on the fourth signal block to obtain a sixth signal block; and
transmitting the sixth signal block, wherein
the preset condition comprises: a value of the fourth signal block at a second time domain position index is a fifth reference signal, the fifth reference signal is related to at least one of a user ID, a quantity of frequency domain resources of a user, and a quantity of phase noise pilots of the user, and the second time domain position index is a fourth preset index.

14. The method according to any one of claims 10 to 13, wherein the precoding the third signal block comprises:
precoding the third signal block by using a block multiplexing BM-orthogonal chirp division multiplexing OCDM encoding technology or an orthogonal frequency division multiplexing OFDM technology.

15. The method according to claim 11, wherein the second phase noise pilot block comprises $M_{PTRS} \times N$ pilot symbols and is represented as a first matrix being $M_{PTRS} \times N$ dimensional, the fourth data block comprises $(M - M_{PTRS}) \times N$ data symbols and is represented as a second matrix being $(M - M_{PTRS}) \times N$ dimensional, M is a sum of a quantity of subcarriers used to transmit the fourth data block and a quantity of subcarriers used to transmit the second phase noise pilot block, N is a quantity of OFDM symbols, M, $M_{PTRS}$, and N are positive integers, and the third signal block is represented as a third matrix being $M \times N$ dimensional;

a first column vector $X_{PTRS}(:,1)$ in the first matrix meets the following relationship:

$$X_{PTRS}(:,1) = (\overline{P}_{PTRS})^{-1}\left(\begin{bmatrix} a \\ a \\ \vdots \\ a \end{bmatrix} - \overline{P}_{data} X_{QAM}(:,1)\right),$$

wherein
$X_{QAM}(:,1)$ is a first column vector in the second matrix;

$\begin{bmatrix} a \\ a \\ \vdots \\ a \end{bmatrix}$ is a matrix being $M_{PTRS}$ dimensional, and $a$ is a preset value;

$\overline{P}_{PTRS}$ is a submatrix extracted from a matrix P based on the second frequency domain position index, the matrix

$$P = F_M^H \times A, \quad A = F_M^H \wedge F_M, \quad F_M^H$$

represents a conjugate transpose of a matrix $F_M$, ^ represents a diagonal matrix being M*M dimensional, and $F_M$ represents a Fourier transform matrix being M*M dimensional;

$\overline{P}_{data}$ is a submatrix formed by an element remaining after the submatrix $\overline{P}_{PTRS}$ is extracted from the matrix P; and an $n^{th}$ column vector $X_{PTRS}(:,n)$ in the first matrix meets the following relationship:

$$X_{PTRS}(:, n) = (\overline{P}_{PTRS})^{-1}\left(\begin{bmatrix} 0 \\ 0 \\ \vdots \\ 0 \end{bmatrix} - \overline{P}_{data}X_{QAM}(:, n)\right),$$

wherein

$X_{QAM}(:,n)$ is an $n^{th}$ column vector in the second matrix, and a value of n is a positive integer between 2 and N.

16. The method according to claim 12 or 13, wherein the second phase noise pilot block comprises $M_{PTRS} \times N$ pilot symbols and is represented as a first matrix being $M_{PTRS} \times N$ dimensional, the fourth data block comprises (M - $M_{PTRS}) \times N$ data symbols and is represented as a second matrix being (M - $M_{PTRS}) \times N$ dimensional, M is a sum of a quantity of subcarriers used to transmit the fourth data block and a quantity of subcarriers used to transmit the second phase noise pilot block, N is a quantity of OFDM symbols, M, $M_{PTRS}$, and N are positive integers, and the third signal block is represented as a third matrix being $M \times N$ dimensional;

a first column vector $X_{PTRS}(:,1)$ in the first matrix meets the following relationship:

$$X_{PTRS}(:,1) = (\overline{P}_{PTRS})^{-1}\left(\begin{bmatrix} a \\ a \\ \vdots \\ a \end{bmatrix} - \overline{P}_{data}X_{QAM}(:,1)\right),$$

wherein $X_{QAM}(:,1)$ is a first column vector in the second matrix;

$\begin{bmatrix} a \\ a \\ \vdots \\ a \end{bmatrix}$ is a matrix being $M_{PTRS}$ dimensional, and $a$ is a preset value;

$\overline{P}_{PTRS}$ is a submatrix extracted from a matrix P based on the second time domain position index, the matrix

$$P = F_M^H \times A, \quad A = F_M^H \wedge F_M, \quad F_M^H$$

represents a conjugate transpose of a matrix $F_M$, ^ represents a diagonal matrix being M*M dimensional, and $F_M$ represents a Fourier transform matrix being M*M dimensional;

$\overline{P}_{data}$ is a submatrix formed by an element remaining after the submatrix $\overline{P}_{PTRS}$ is extracted from the matrix P; and an $n^{th}$ column vector $X_{PTRS}(:,n)$ in the first matrix meets the following relationship:

$$X_{PTRS}(:, n) = (\overline{P}_{PTRS})^{-1}\left(\begin{bmatrix} 0 \\ 0 \\ \vdots \\ 0 \end{bmatrix} - \overline{P}_{data}X_{QAM}(:, n)\right),$$

wherein

$X_{QAM}(:,n)$ is an $n^{th}$ column vector in the second matrix, and a value of n is a positive integer between 2 and N.

17. A signal transmission apparatus, comprising:

an obtaining module, configured to obtain a first data block;
an encoding module, configured to precode the first data block to obtain a second data block; and
a transmission module, configured to map a first phase noise pilot block and the second data block to time-frequency resources for transmission.

18. The apparatus according to claim 17, wherein the second data block comprises (M - $M_{PTRS}$) × N data symbols, the first phase noise pilot block comprises $M_{PTRS}$ × N pilot symbols, M is a sum of a quantity of subcarriers used to transmit the second data block and a quantity of subcarriers used to transmit the first phase noise pilot block, and M, $M_{PTRS}$, and N are positive integers; and
the transmission module is configured to:
configure $M_{PTRS}$ pilot symbols and (M - $M_{PTRS}$) data symbols on each of N orthogonal frequency division multiplexing OFDM symbols.

19. The apparatus according to claim 18, wherein the $M_{PTRS}$ pilot symbols are evenly spaced apart on the OFDM symbol.

20. The apparatus according to claim 18 or 19, wherein a pilot signal of the first phase noise pilot block is a first reference signal, and the first reference signal is related to at least one of a user ID, a quantity of frequency domain resources of a user, and a quantity of phase noise pilots of the user.

21. The apparatus according to claim 18 or 19, wherein a pilot signal of the first phase noise pilot block causes a value of a third data block at a first time domain position index to be a second reference signal, the third data block is obtained by performing inverse Fourier transform on the second data block, the first time domain position index is a first preset index, and the second reference signal is related to at least one of a user ID, a quantity of frequency domain resources of a user, and a quantity of phase noise pilots of the user.

22. The apparatus according to claim 17, wherein the transmission module is configured to:
combine the first phase noise pilot block and the second data block into a first signal block; and perform Fourier transform on the first signal block to obtain a second signal block, and map the second signal block to the time-frequency resource for transmission, wherein a pilot signal of the first phase noise pilot block causes a value of the second signal block at a first frequency domain position index to be a third reference signal, the first frequency domain position index is a second preset index, and the third reference signal is related to at least one of a user ID, a quantity of frequency domain resources of a user, and a quantity of phase noise pilots of the user.

23. The apparatus according to any one of claims 17 to 22, wherein a time-frequency resource of the first phase noise pilot block is different from a time-frequency resource of the second data block.

24. A signal transmission apparatus, comprising:

a determining module, configured to determine a second phase noise pilot block based on a preset condition;
an encoding module, configured to: combine a to-be-transmitted fourth data block and the second phase noise pilot block to obtain a third signal block, and precode the third signal block to obtain a fourth signal block; and
a transmission module, configured to transmit the fourth signal block.

25. The apparatus according to claim 24, wherein the preset condition comprises: a value of the fourth signal block at a second frequency domain position index is a fourth reference signal, the fourth reference signal is related to at least one of a user IDID, a quantity of frequency domain resources of a user, and a quantity of phase noise pilots of the user, and the second frequency domain position index is a third preset index.

26. The apparatus according to claim 24, wherein the preset condition comprises: a value of a fifth signal block at a second time domain position index is a fifth reference signal, the fifth signal block is obtained by performing inverse Fourier transform on the fourth signal block, the second time domain position index is a fourth preset index, and the fifth reference signal is related to at least one of a user IDID, a quantity of frequency domain resources of a user, and a quantity of phase noise pilots of the user.

27. The apparatus according to claim 24, wherein the transmission module is configured to:

   perform Fourier transform on the fourth signal block to obtain a sixth signal block; and
   transmit the sixth signal block, wherein
   the preset condition comprises: a value of the fourth signal block at a second time domain position index is a fifth reference signal, the fifth reference signal is related to at least one of a user ID, a quantity of frequency domain resources of a user, and a quantity of phase noise pilots of the user, and the second time domain position index is a fourth preset index.

28. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 9 or the method according to any one of claims 10 to 16 by using a logic circuit or by executing code instructions.

29. A computer-readable storage medium, wherein the storage medium stores a computer program or instructions; and when the computer program or the instructions are executed by a communication apparatus, the method according to any one of claims 1 to 9 or the method according to any one of claims 10 to 16 is implemented.

30. A computer program product, wherein the computer program product stores instructions; and when the instructions are run on a computer, the computer is enabled to perform the method according to any one of claims 1 to 9 or the method according to any one of claims 10 to 16.

31. A signal transmission system, comprising:

   a transmit end, configured to perform the method according to any one of claims 1 to 9 or the method according to any one of claims 10 to 16; and
   a receive end, configured to receive a signal from the transmit end, and determine phase noise based on the signal.

Terminal

Satellite

FIG. 1A

EP 4 583 441 A1

FIG. 1B

FIG. 1C

S201

| Obtain a first data block |

S202

| Precode the first data block to obtain a second data block |

S203

| Map a first phase noise pilot block and the second data block to time-frequency resources for transmission |

FIG. 2

First data block → Precoding (AXB) → DFT → Mapping (Mapping) → IFFT → Time-domain signal

First phase noise pilot block

Demodulation reference signal

FIG. 3

FIG. 4

First data
block

Precoding
(AXB)

Mapping
(Mapping)

IFFT

Time-
domain
signal

First phase noise
pilot block

Demodulation
reference signal

FIG. 5

S601

Determine a second phase noise pilot block based on a preset condition

S602

Combine a to-be-transmitted fourth data block and the second phase noise pilot
block to obtain a third signal block

S603

Precode the third signal block to obtain a fourth signal block

S604

Transmit the fourth signal block

FIG. 6

Fourth data
block

Second phase
noise pilot block

Precoding
(AXB)

DFT

Mapping
(Mapping)

IFFT

Demodulation
reference signal

FIG. 7

Fourth data block

Second phase
noise pilot block

Combine

Second signal block

AXB

Fourth signal block      IDFT      Third signal block

Frequency domain
(RE index)

Time-frequency
resource mapping

Phase noise pilot
symbols are located at
preset time-frequency
resource positions

Time domain (OFDM
symbol index)

FIG. 8

Phase noise pilot symbols are located at preset time-frequency resource positions

Fourier transform is performed on each row

Unit impulse signal

**FIG. 9**

Communication apparatus 1000

Obtaining module 1001

Encoding module 1002

Transmission module 1003

**FIG. 10**

Communication apparatus 1100

Determining module 1101

Encoding module 1102

Transmission module 1103

FIG. 11

Communication apparatus 1200

Processor 1210

Interface circuit 1220

Memory 1230

FIG. 12

## INTERNATIONAL SEARCH REPORT

| International application No. |
| --- |
| **PCT/CN2022/121390** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 相位噪声, 相位跟踪参考信号, 相噪导频, 预编码, 数据, phase noise, PTRS, PT-RS, precoding, data, OFDM, BM-OCDM

### C. DOCUMENTS CONSIDERED TO BE RELEVANT

| Category* | Citation of document, with indication, where appropriate, of the relevant passages | Relevant to claim No. |
| --- | --- | --- |
| X | INTEL CORP. "On PT-RS for DFT-s-OFDM" <br> *3GPP TSG-RAN WG1 #89, R1-1707367,* 07 May 2017 (2017-05-07), <br> text, pages 1-6 | 1-31 |
| X | CN 108259143 A (CHINA ACADEMY OF TELECOMMUNICATIONS TECHNOLOGY) 06 July 2018 (2018-07-06) <br> description, paragraphs [0003]-[0320] | 1-9, 17-23, 28-31 |
| X | CN 108259145 A (CHINA ACADEMY OF TELECOMMUNICATIONS TECHNOLOGY) 06 July 2018 (2018-07-06) <br> description, paragraphs [0008]-[0210] | 10-16, 24-31 |
| A | US 2020076558 A1 (WISIG NETWORKS PRIVATE LTD.) 05 March 2020 (2020-03-05) <br> entire document | 1-31 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 May 2023** | **01 June 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/121390**

| Patent document cited in search report | | | Publication date (day/month/year) | Patent family member(s) | | | Publication date (day/month/year) |
|---|---|---|---|---|---|---|---|
| CN | 108259143 | A | 06 July 2018 | KR | 20190090863 | A | 02 August 2019 |
| | | | | EP | 3565161 | A1 | 06 November 2019 |
| | | | | EP | 3565161 | A4 | 01 April 2020 |
| | | | | EP | 3565161 | B1 | 21 April 2021 |
| | | | | US | 2019312697 | A1 | 10 October 2019 |
| | | | | US | 10862644 | B2 | 08 December 2020 |
| | | | | JP | 2019537373 | A | 19 December 2019 |
| | | | | JP | 6992065 | B2 | 13 January 2022 |
| | | | | WO | 2018121671 | A1 | 05 July 2018 |
| CN | 108259145 | A | 06 July 2018 | | None | | |
| US | 2020076558 | A1 | 05 March 2020 | US | 2022337369 | A1 | 20 October 2022 |
| | | | | US | 2020374082 | A1 | 26 November 2020 |
| | | | | US | 11343047 | B2 | 24 May 2022 |
| | | | | US | 10958395 | B2 | 23 March 2021 |
| | | | | WO | 2018100591 | A1 | 07 June 2018 |
| | | | | US | 2020374081 | A1 | 26 November 2020 |
| | | | | US | 11349622 | B2 | 31 May 2022 |

Form PCT/ISA/210 (patent family annex) (July 2022)